# EUROPEAN PATENT APPLICATION

(11) **EP 3 978 648 A1**
(43) Date of publication of application: **06.04.2022**
(21) Application number: 19930462.7
(22) Date of filing: 30.09.2019
(51) Int. Cl.: C23C 24/10

(54) **TOOL COATING PROCESSING METHOD**

(30) Priority: 31.05.2019 CN 201910469894
(71) Applicant: Yangjiang Knife-Scissor Hardware Research Institution of Industry Technology, Yangjiang, Guangdong 529500 (CN); Yangjiang High Power Laser Application Laboratory Co., Ltd., Yangjiang, Guangdong 529500 (CN); Yangjiang Puruide Additive Manufacturing Research Institute Co., Ltd., Yangjiang, Guangdong 529500 (CN)
(72) Inventor: ZHANG, Ruihua, Yangjiang, Guangdong 529500 (CN); LU, Chao, Yangjiang, Guangdong 529500 (CN); QU, Yuebo, Yangjiang, Guangdong 529500 (CN)
(74) Representative: J A Kemp LLP
(86) International application number: PCT/CN2019/109401
(87) International publication number: WO 2020/237957

(57) **Abstract**

A tool coating processing method, comprising a molten pool forming step: converging a bonding phase (1) to a plasma arc heat source by means of a coaxial powder feeding channel, the bonding phase (1) being deposited on a tool base material after melting, so as to form a molten pool; and a reinforcing phase (2) adding step: feeding a reinforcing phase (2) by means of a side powder feeding channel into the molten pool after a plasma beam is removed, cladding the bonding phase (1) and the reinforcing phase (2) under the condition of ultrasonic vibration, and forming a coating on the surface of a tool. The processing method solves the feeding problem, the burning problem and the problem of uneven distribution in a coating of hard phase particles in a processing process of a tool coating, improves the hardness, corrosion resistance and wear resistance of the tool coating, and finally improves the service life of the tool.

## Description

### TECHNICAL FIELD

The present invention relates to a tool coating processing method, and belongs to the technical field of material processing.

### BACKGROUND ART

At present, common preparation methods of surface composite coatings are electroplating, surface overlaying, vapor deposition, spray coating, laser cladding and plasma cladding, *etc.* In order to increase the wear resistance, corrosion resistance, *etc.* of coatings, carbides or nitrides with high hardness, such as tungsten carbide, titanium carbide and vanadium carbide, are often added in a coating preparation process. A base powder is evenly mixed with a fine hard particle powder by a ball milling process, followed by coating preparation. However, a complex solid phase reaction occurs in a ball-milling mixing process of the base powder and hard phase particles. A mechanical force (shear force, impact force, *etc.*) generated in the ball-milling process causes a metal powder/hard particles to be subjected to plastic deformation, fracture, breakage, crystal structure reconstruction, *etc.* Therefore, the ball-milling process changes the initial morphology and structural characteristics of original powder materials, and these changes have unpredictable effects on a subsequent coating preparation process. In addition, when a fine and irregular hard particle powder is separately fed, the problem of blockage of a powder feeding pipe is easily caused. When a coating is prepared by using hard phase particles with a large particle size for separate powder feeding, there is another problem that the hard phase particles with the large particle size are easily peeled off in the coating.

In the process of laser cladding and plasma cladding, the hard phase particles are usually mixed with the base powder and then fed into a heat source for heating at the same time, so that under the effect of a high-temperature heat source, the hard particles will be partially burnt, waste of the hard phase particles will be caused, and the actual performance of the prepared coating will not be as good as expected. In addition, the selection of hard phase particles is also a key step in the coating preparation process: during the existing hard phase selection, the issue of density difference between the hard phase particles and the base powder material is not considered, which often results in uneven distribution of the hard phase particles in the coating and cracks in the coating, thereby affecting the usage performance of the coating.

### SUMMARY

In order to overcome the shortcomings of the prior art, an object of the present invention is to provide a tool coating processing method. The processing method solves the feeding problem, the burning problem and the problem of uneven distribution in a coating of hard phase particles in a processing process of a tool coating, improves the hardness, corrosion resistance and wear resistance of the tool coating, and finally improves the service life of the tool.

The object of the present invention can be achieved by adopting the following technical solutions: a tool coating processing method, including:
molten pool forming step: converging a bonding phase to a plasma arc heat source by means of a coaxial powder feeding channel, the bonding phase being deposited on a tool base material after melting, so as to form a molten pool; and
reinforcing phase adding step: feeding a reinforcing phase by means of a side powder feeding channel into the molten pool after a plasma beam is removed, cladding the bonding phase and the reinforcing phase under the condition of ultrasonic vibration, and forming a coating on the surface of a tool.

In some embodiments, the bonding phase is a self-fluxing alloy powder, and has a density of 6 - 9 g/cm³ and a powder size of 48 - 250 µm. The bonding phase density herein is the density of a bulk material corresponding to the powder material, rather than an apparent density or tap density of the powder material.

In some embodiments, the self-fluxing alloy powder is one or more selected from a group consisting of stainless steel, nickel-based alloy and cobalt-based alloy.

In some embodiments, the stainless steel is of one or more selected from a group consisting of 1Cr13, 3Cr13, 304, 316, 420, 440, RWL34, PMC27, 5Cr15MoV, 8Cr13MoV, and 9Cr18MoV.

In some embodiments, the nickel-based alloy is one or more selected from a group consisting of Ni60, Ni60A, Ni60W, Ni55, Ni62, and Deloro60.

In some embodiments, the cobalt-based alloy is one or more selected from a group consisting of Co190, CoCrMo, Co800, Tribaloy 800, and Stellite 20.

In some embodiments, the self-fluxing alloy powder is one or more selected from a group consisting of 3Cr13, Ni60A, CoCrMo, and 8Cr13MoV.

In some embodiments, the reinforcing phase has a density of 6.1 - 9.2 g/cm³. The density is very close to that of the bonding phase. The reinforcing phase herein has the density of a bulk material corresponding to the powder material, rather than an apparent density or tap density of the powder material.

In some embodiments, the reinforcing phase includes at least one of zirconium carbide, niobium carbide, niobium nitride, zirconium nitride, and niobium boride, and the reinforcing phase is spherical particles with a particle size of 5 - 25 µm and a Hall flow velocity of less than 25 s/50g, preferably less than 18 s/50g.

Zirconium carbide, niobium carbide, niobium nitride, zirconium nitride, and niobium boride all have high hardness and high melting point, and have a similar density to the bonding phase within a range of 6.1 - 9.2 g/cm³. The similar density can effectively prevent the uneven distribution of the reinforcing phase in the coating. In the prior art, tungsten carbide is commonly used as the reinforcing phase due to its high hardness. However, according to experimental findings, in one technical solution of the present invention, when tungsten carbide is used as the reinforcing phase, tungsten carbide is deposited on a lower layer of the molten pool, resulting in uneven distribution and poor surface wear resistance of the coating.

In some embodiments, the power of ultrasonic vibration is 50 - 300 W in the reinforcing phase cladding step.

In some embodiments, a mass ratio of the bonding phase to the reinforcing phase is 20 : (1 - 50).

In some preferred embodiments, a mass ratio of the bonding phase to the reinforcing phase is 12 : (3 - 28).

In some further preferred embodiments, a mass ratio of the bonding phase to the reinforcing phase is 35 : (15 - 35).

In some embodiments, the tool base material is one or more selected from a group consisting of carbon steel and stainless steel.

In some embodiments, the tool base material is one or more selected from a group consisting of 45# carbon steel, carbon steel Q235, 2Cr13 stainless steel, 3Cr13 stainless steel, 5Cr15 stainless steel, and 304 stainless steel.

In one embodiment, the tool base material is 3Cr13, the bonding phase is 3Cr13, and the reinforcing phase is niobium carbide.

In another embodiment, the tool base material is 45# carbon steel, the bonding phase is Ni60A nickel-based alloy powder, and the reinforcing phase is zirconium carbide.

In another embodiment, the tool base material is 304 stainless steel, the bonding phase is CoCrMo cobalt-based alloy powder, and the reinforcing phase is niobium boride.

In another embodiment, the tool base material is 5Cr15 stainless steel, the bonding phase is 8Cr13MoV iron-based alloy powder, and the reinforcing phase is niobium nitride.

In some embodiments, an angle between a central axis of the coaxial powder feeding channel and the side powder feeding channel is 15 - 75 degrees.

In some embodiments, a distance between a discharge nozzle of the coaxial powder feeding channel and the tool base material is 5 - 15 mm, and a feeding velocity of the bonding phase is 10 - 25 g/min.

In some embodiments, a horizontal distance between a discharge nozzle of the side powder feeding channel and the coaxial powder feeding channel is 1 - 5 cm, and a feeding velocity of the reinforcing phase is 5 - 14 g/min.

In some embodiments, a plasma beam arc is a combined plasma arc.

In some embodiments, the cladding conditions are: ion gas flow of 0.6 - 6 L/min, protective gas flow of 5 - 25 L/min, powder feeding gas flow of 0.6 - 6 L/min, cladding current of 3 - 180 A, base value/striking arc current of 0 - 29 A, pilot arc current of 0 - 20 A, cladding time of 50 - 300 ms, interval time of 50 - 300 ms, protective gas delay of 0 - 5 s, current rise time and fall time of both 0.1 - 0.5 s, protective gas advance of 0 - 3 s, and cladding velocity of 120 - 480 mm/min.

In some embodiments, the cladding conditions are: ion gas flow of 3 - 5 L/min, protective gas flow of 5 - 10 L/min, powder feeding gas flow of 2 - 5 L/min, cladding current of 20 - 50A, base value/striking arc current of 20 - 29 A, pilot arc current of 5 - 10A, cladding time of 80 - 150 ms, interval time of 50 - 150 ms, protective gas delay of 1 - 3 s, current rise time and fall time of both 0.1 - 0.5 s, protective gas advance of 0 - 3 s, and cladding velocity of 150 - 300 mm/min.

In some embodiments, the processing method further includes annealing, quenching and tempering the tool coating.

Compared with the prior art, one of the above technical solutions provides the following advantages or beneficial effects.
1. In the present invention, the manner of coaxial powder feeding in combination with side powder feeding can reduce the burning phenomenon of the reinforcing phase due to an excessively high temperature. The present invention avoids a method of mixing the reinforcing phase with the bonding phase by ball milling, because such method destroys the morphology and surface energy of raw materials during ball milling, thereby affecting the cladding process and performance. The reinforcing phase is directly fed into the molten pool using a side powder feeding pipeline instead of a heat source plasma arc, so that the burning loss caused by directly feeding into a heat source can also be reduced.
2. In the process of preparing a tool coating according to the present invention, the addition of ultrasonic vibration has a significant effect on the flow of metal in the molten pool after cladding, the crystallization nucleation and the growth of grains, and the growing grains are broken under the ultrasonic vibration to form a plurality of nucleation cores, so that the nucleation rate is increased, and a coating with fine grains is finally formed. In addition, the ultrasonic vibration has a good auxiliary effect on the even distribution of hard phase particles in the coating, and an edge of the tool prepared without cracks.

### BRIEF DESCRIPTION OF THE DRAWINGS

Figure 1 is a schematic diagram of processing according to Example 1;
Figure 2 is a surface topography of a tool after edge opening according to Example 1;
Figure 3 is a metallograph of a tool after edge opening according to Example 1;
Figure 4 is a surface topography of a tool after edge opening according to Example 2;
Figure 5 is a metallograph of a tool after edge opening according to Example 2;
Figure 6 is a surface topography of a tool after edge opening according to Example 3;
Figure 7 is a metallograph of a tool after edge opening according to Example 3;
Figure 8 is a surface topography of a tool after edge opening according to Example 4;
Figure 9 is a metallograph of a tool after edge opening according to Example 4;
Figure 10 is a surface topography of a tool after edge opening according to Example 5;
Figure 11 is a metallograph of a tool after edge opening according to Example 5;
Figure 12 is a surface topography of a tool after edge opening according to Example 6;
Figure 13 is a metallograph of a tool after edge opening according to Example 6;
Figure 14 is a macrocrack morphology of a coating according to Comparative Example 3;
Figure 15 is a metallograph of a tool after edge opening according to Comparative Example 5;
Figure 16 is a corrosion morphology photograph of Comparative Example 5;
Figure 17 is a metallograph of a corrosion pit according to Comparative Example 5; and
Figure 18 is a metallograph of a coating according to Comparative Example 6.

In the figures: 1, bonding phase; 2, reinforcing phase.

### DETAILED DESCRIPTION OF THE INVENTION

The present invention will now be further described with reference to the accompanying drawings and detailed description.

A tool coating processing method includes a molten pool forming step and a reinforcing phase adding step.

In the molten pool forming step, a bonding phase is converged to a plasma arc heat source by means of a coaxial powder feeding channel, and the bonding phase is deposited on a tool base material after melting, so as to form a molten pool. The bonding phase is a self-fluxing alloy powder, and has a density of 6 - 9 g/cm³ and a powder size of 48 - 250 µm.

The particle size of the bonding phase is limited to 48 - 250 µm, so as to overcome the problem of blockage of powder feeding.

A distance between a discharge nozzle of the coaxial powder feeding channel and the tool base material is 5 - 15 mm.

In the reinforcing phase adding step, a reinforcing phase is fed by means of a side powder feeding channel into the molten pool after a plasma beam is removed, the bonding phase and the reinforcing phase are clad under the condition that the power of ultrasonic vibration is 50 - 300 W, and a coating is formed on the surface of a tool.

A horizontal distance between a discharge nozzle of the side powder feeding channel and the coaxial powder feeding channel is 1 - 5 cm.

The reinforcing phase includes at least one of zirconium carbide, niobium carbide, niobium nitride, zirconium nitride, and niobium boride, and the reinforcing phase is spherical particles with a particle size of 5 - 25 µm and a Hall flow velocity of less than 25 s/50g, preferably less than 18 s/50g.

The powder density of the bonding phase is limited to 6 - 9 g/cm³, and the reinforcing phase materials are zirconium carbide, niobium carbide, niobium nitride, zirconium nitride, and niobium boride, which all have high hardness and high melting point, and have a similar density to the bonding phase within a range of 6.1 - 9.2 g/cm³. The similar density can effectively prevent the uneven distribution of the reinforcing phase in the coating. A relationship between the density of the reinforcing phase and the density of the bonding phase is not considered when selecting the reinforcing phase using the traditional cladding technology, which easily results in the uneven distribution of the reinforcing phase in the coating due to the density difference in the molten pool, and affects the evenness of the coating performance.

The particle size of 5 - 25 µm can not only ensure the smooth delivery of the reinforcing phase, but also prevent the reinforcing phase from falling off during the polishing process of the coating. When the particle size is small, fine particles tend to agglomerate under the action of Van der Waals' force and moisture, resulting in the blockage of a pipeline in the powder feeding process. When the particle size is large, side powder feeding is easy to achieve, but the reinforcing phase particles are likely to fall off during the later edge-opening and polishing process of the coating.

The reinforcing phase is spherical and has a small Hall flow velocity, which can ensure that the reinforcing phase is fed into the molten pool smoothly. When the reinforcing phase is non-spherical, the friction between particles is large and the flow performance is poor. Meanwhile, the Hall flow time is long, and it is difficult for powder feeding eventually. In the present invention, a spherical powder is used, which has a good flow property and can realize side powder feeding.

The bonding phase interacts with a micro-beam plasma heat source to generate a molten pool on the base material, and after the reinforcing phase is fed into the molten pool before the molten pool solidifies upon the plasma beam is removed, the distribution of the reinforcing phase in the molten pool can be more even under the action of ultrasonic vibration.

A mass ratio of the bonding phase to the reinforcing phase is 20:(1 - 50), preferably 12:(3 - 28), and more preferably 35:(15 - 35).

The reinforcing phase plays the role of improving hardness and wear resistance in the bonding phase, and can achieve the effect of integration of hardness and softness by even distribution in the coating, thereby increasing the hardness and wear resistance of the coating finally. However, when the content of the reinforcing phase is too low, the strengthening effect is not obvious. When the content of the reinforcing phase is too high, the bonding phase is reduced accordingly, and macrocracks appear in a material solidification process because a leading edge of a solidification interface is not supplemented by melt.

An angle between a central axis of the coaxial powder feeding channel and the side powder feeding channel is 15 - 75 degrees.

This angle range can ensure that the cladding coating has a good appearance and morphology. An angle between the discharge nozzle of the side powder feeding channel and the coaxial powder feeding channel cannot be too large or too small, otherwise the appearance and morphology of the cladding coating are affected.

A plasma beam arc is a combined plasma arc.

That is, a non-transferred arc and a transferred arc work at the same time. The non-transferred arc is used to strike and pilot an arc, so that the transferred arc can still work stably under a small current. The transferred arc is used to melt the powder. The combined plasma arc has the advantages of arc stability, high energy density, wide processing window, *etc.*

The cladding conditions are: ion gas flow of 0. 6 - 6 L/min, protective gas flow of 5 - 25 L/min, powder feeding gas flow of 0. 6 - 6 L/min, cladding current of 3 - 180 A, base value/striking arc current of 0 - 29 A, pilot arc current of 0 - 20 A, cladding time of 50 - 300 ms, interval time of 50 - 300 ms, protective gas delay of 0 - 5 s, current rise time and fall time of both 0.1 - 0.5 s, protective gas advance of 0 - 3 s, cladding velocity of 120 - 480 mm/min, and argon used as protective gas, ion gas and powder feeding gas.

Preferably, the cladding conditions are: an ion gas flow of 3 - 5 L/min, protective gas flow of 5 - 10 L/min, powder feeding gas flow of 2 - 5 L/min, cladding current of 20 - 50 A, base value/striking arc current of 20 - 29 A, pilot arc current of 5 - 10 A, cladding time of 80 - 150 ms, interval time of 50 - 150 ms, protective gas delay of 1 - 3 s, current rise time and fall time of both 0.1 - 0.5 s, protective gas advance of 0 - 3 s, and cladding velocity of 150 - 300 mm/min.

The prepared tool coating is correspondingly annealed for stress relief, and then correspondingly quenched and tempered for heat treatment.

### Example 1:

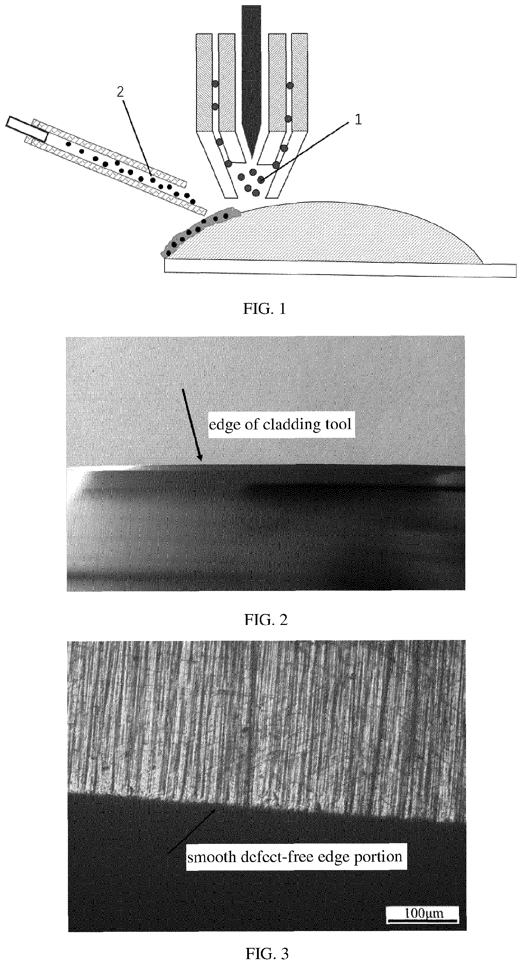

Figure 1 shows a schematic diagram of processing, a bonding phase 1 powder is fed from a coaxial powder feeding channel, and a reinforcing phase 2 powder is fed from a side powder feeding channel.

A tool coating processing method includes:
Molten pool forming step: a bonding phase is converged to a plasma arc heat source by means of a coaxial powder feeding channel, and the bonding phase is deposited on a tool base material (3Cr13) after melting, so as to form a molten pool. The bonding phase is stainless steel 3Cr13 (with a density of 7.75 g/cm³), and has a powder size of 53-105 µm. A distance between a discharge nozzle of the coaxial powder feeding channel and the tool base material is 8 mm, and a feeding velocity of the bonding phase is 10 g/min.

Reinforcing phase adding step: a reinforcing phase is fed by means of a side powder feeding channel into the molten pool after a plasma beam is removed. The reinforcing phase is niobium carbide with a density of 7.8 g/cm³. The reinforcing phase is spherical particles with a particle size of 5-20 µm and a Hall flow velocity of 17.5 s/50g. A horizontal distance between a discharge nozzle of the side powder feeding channel and the coaxial powder feeding channel is 1 cm, and a feeding velocity of the reinforcing phase is 6 g/min. The bonding phase and the reinforcing phase are clad under the condition that the power of ultrasonic vibration is 100 W, and a coating is formed on the surface of a tool.

A mass ratio of the bonding phase to the reinforcing phase is 19:1.

An angle between a central axis of the coaxial powder feeding channel and the side powder feeding channel is 45 degrees.

A plasma beam arc is a combined plasma arc.

The cladding conditions are: ion gas flow of 3 L/min, protective gas flow of 6 L/min, powder feeding gas flow of 3 L/min, cladding current of 30A, base value/striking arc current of 28A, pilot arc current of 10A, cladding time of 100 ms, interval time of 100 ms, protective gas delay of 3 s, current rise time and fall time are both 0.1 s, protective gas advance of 2 s, cladding velocity of 240mm/min, and argon used as protective gas, ion gas and powder feeding gas.

The prepared tool coating is annealed at 800°C for 30 min by slow cooling, quenched at 950°C for 15 min by forced air and tempered at 600°C for 30 min by air cooling.

Figure 2 is a surface topography of an edge-opened tool after finishing the coating process, where no corrosion spots are generated on an edge. Figure 3 is a metallograph after edge opening, where the edge is smooth and defect-free, indicating that reinforcing phase particles achieve a good strengthening effect in a bonding phase without affecting the corrosion of a coating and polishing edge opening.

### Example 2:

### Tool Coating Processing Method

In contrast to Example 1, a mass ratio of the bonding phase to the reinforcing phase is 3:2.

The bonding phase has a particle size of 105 - 180 µm, the reinforcing phase has a particle size of 10 - 25 µm and a Hall flow velocity of 17 s/50g. The remaining processing parameters are the same as in Example 1.

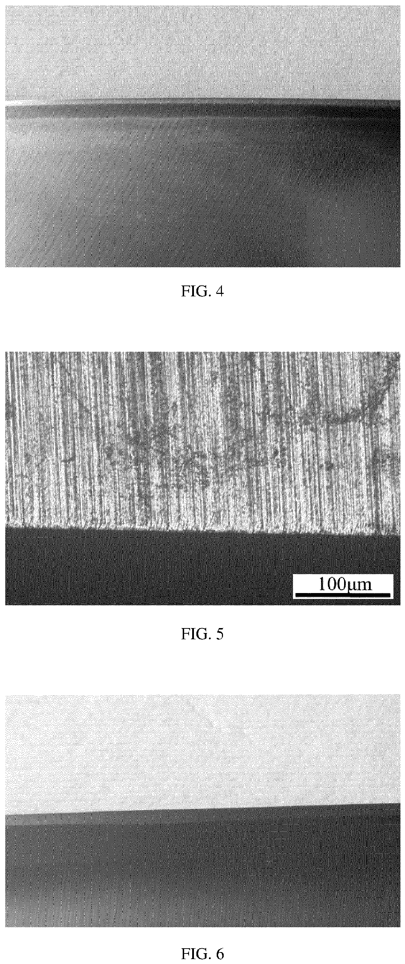

Figures 4-5 show the surface morphology and metallograph of the tool after edge opening are free from corrosion and peeling-off of reinforcing phase particles.

### Example 3:

### Tool Coating Processing Method

In contrast to Example 1, a mass ratio of the bonding phase to the reinforcing phase is 3:7.

The bonding phase has a particle size of 120 - 200 µm, the reinforcing phase has a particle size of 15 - 25 µm and a Hall flow velocity of 16.5 s/50g. The remaining processing parameters are the same as in Example 1.

Figures 6 - 7 show the surface morphology and metallograph of the tool after edge opening are free from corrosion and peeling-off of reinforcing phase particles.

### Example 4:

### Tool Coating Processing Method

In contrast to Example 1, in the present example, the base material is 5Cr15 stainless steel, the bonding phase is 8Cr13MoV iron-based alloy powder, and has a density of 7.82 g/cm³ and a powder size of 120 - 250 µm, and a distance between the discharge nozzle of the coaxial powder feeding channel and the tool base material is 10 mm. The reinforcing phase is spherical niobium nitride with a density of 7.3 g/cm³, and has a particle size of 8-25 µm and a Hall flow velocity of 20.0 s/50g. A horizontal distance between the discharge nozzle of the side powder feeding channel and the coaxial powder feeding channel is 3 cm. The bonding phase and the reinforcing phase are clad under the condition that the power of ultrasonic vibration is 200 W. A coating is formed on the surface of a tool using the same method and the same process parameters as in Example 1.

A mass ratio of the bonding phase to the reinforcing phase is 1:1.

An angle between a central axis of the coaxial powder feeding channel and the side powder feeding channel is 60 degrees.

The prepared tool coating is quenched at 1080°C for 30 min and air-cooled to room temperature, and then tempered at 500°C for 30 min and air-cooled to room temperature.

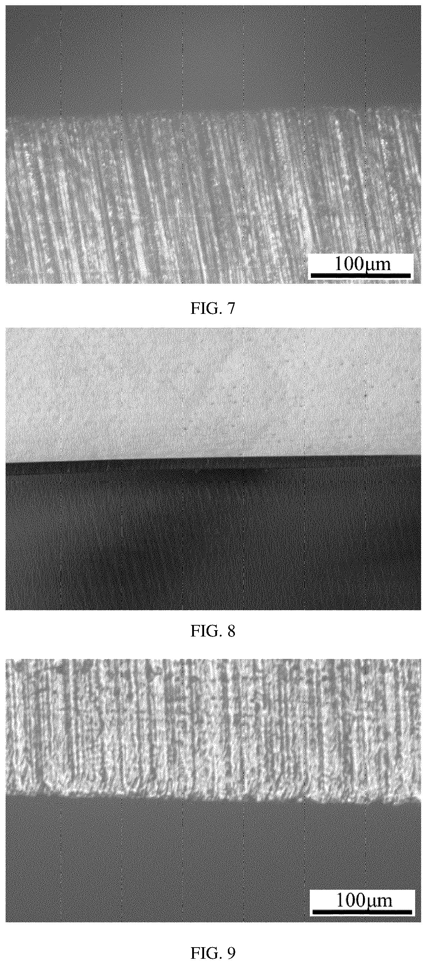

Figures 8 - 9 show the surface morphology and metallograph of the tool after edge opening are free from corrosion and peeling-off of reinforcing phase particles.

### Example 5

### Tool Coating Processing Method

In contrast to Example 1, in the present example, the base material is 304 stainless steel, the bonding phase is CoCrMo cobalt-based alloy powder, and has a density of 8.53 g/cm³ and a powder size of 120-200 µm, and a distance between the discharge nozzle of the coaxial powder feeding channel and the tool base material is 13mm. The reinforcing phase is spherical niobium boride with a density of 7.2 g/cm³, and has a particle size of 5-15 µm and a Hall flow velocity of 22.8 s/50g. A horizontal distance between the discharge nozzle of the side powder feeding channel and the coaxial powder feeding channel is 5 cm. The bonding phase and the reinforcing phase are clad under the condition that the power of ultrasonic vibration is 150 W. A coating is formed on the surface of a tool using the same method and the same process parameters as in Example 1.

A mass ratio of the bonding phase to the reinforcing phase is 3:7.

An angle between a central axis of the coaxial powder feeding channel and the side powder feeding channel is 70 degrees.

The prepared tool coating is subjected to solution treatment at 1100°C for 60min and air-cooled to room temperature.

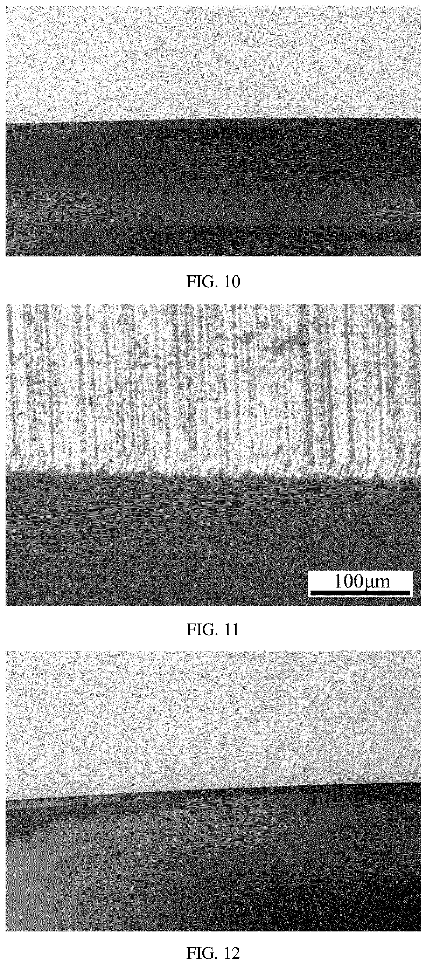

Figures 10 - 11 show the surface morphology and metallograph of the tool after edge opening are free from corrosion and peeling-off of reinforcing phase particles.

### Example 6

### Tool Coating Processing Method

In contrast to Example 1, in the present example, the base material is 45# carbon steel, the bonding phase is Ni60A nickel-based alloy powder, and has a density of 7.53 g/cm³ and a powder size of 105 - 180 µm, and a distance between the discharge nozzle of the coaxial powder feeding channel and the tool base material is 10mm. The reinforcing phase is spherical zirconium carbide with a density of 6.4 g/cm³, and has a particle size of 10 - 25 µm and a Hall flow velocity of 19 s/50g. A horizontal distance between the discharge nozzle of the side powder feeding channel and the coaxial powder feeding channel is 2 cm. The bonding phase and the reinforcing phase are clad under the condition that the power of ultrasonic vibration is 120 W. A coating is formed on the surface of a tool using the same method and the same process parameters as in Example 1.

A mass ratio of the bonding phase to the reinforcing phase is 3:2.

An angle between a central axis of the coaxial powder feeding channel and the side powder feeding channel is 60 degrees.

The prepared tool coating is annealed at 300°C for 30 min by slow cooling.

Figures 12 - 13 show the surface morphology and metallograph of the tool after edge opening are free from corrosion and peeling-off of reinforcing phase particles.

### Comparative Example 1:

### Tool Coating Processing Method

A mass ratio of the bonding phase to the reinforcing phase is 19:1.

The bonding phase has a particle size of 53 - 105 µm, the reinforcing phase has a particle size of 5 - 20 µm and a Hall flow velocity of 17.5 s/50g. In Comparative Example 1, the reinforcing phase and the bonding phase are mixed by ball milling, and the mixed powder is coaxially fed by plasma cladding, rather than fed in a mixed coaxial and side feeding manner. The remaining processing parameters are the same as in Example 1.

The reinforcing phase is fed right below a heat source and directly heated by heat source plasma, and a certain amount of burning loss will occur. Meanwhile, the structure thereof will be changed by ball milling, and comprehensive results will cause the coating performance to be reduced and the friction performance to be poor.

### Comparative Example 2:

A mass ratio of the bonding phase to the reinforcing phase is 97:3. The remaining processing parameters are the same as in Example 1.

The content of the added reinforcing phase is small. Therefore, the comprehensive performance of the coating is lower than that of Example 1, but the performance is similar to that of Comparative Example 1. It is further confirmed that the performance of the coating is affected by the powder mixed by ball milling and the burning loss of the reinforcing phase.

### Comparative Example 3:

A mass ratio of the bonding phase to the reinforcing phase is 3:17. The remaining processing parameters are the same as in Example 1.

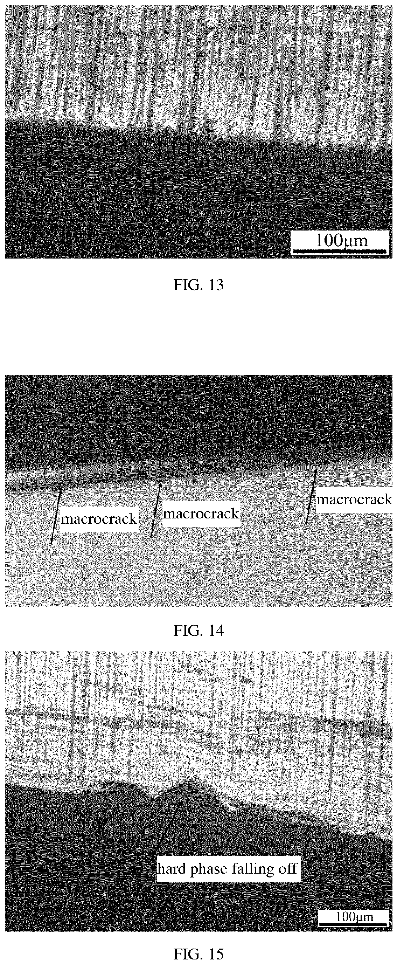

Figure 14 shows a macrocrack morphology of a coating. Macrocracks appear mainly because of a high content of the reinforcing phase and a low content of the bonding phase, and a large tensile stress is generated in a quick solidification process after melting. Meanwhile, there is not enough melt to supplement a solidification interface front, which finally results in the generation of macrocracks. At this time, the hardness and wear resistance of the coating are good due to the high content of the reinforcing phase. However, the coating does not meet the corresponding standards due to the generation of macrocracks caused by uneven solidification shrinkage.

### Comparative Example 4:

The reinforcing phase has a particle size of 2 - 10 µm and a Hall flow velocity of 35 s/50g. The remaining processing parameters are the same as in Example 1.

The particle size of the reinforcing phase is too small, and it is easy to absorb moisture and oxidize, so that the fluidity of the reinforcing phase is poor, and the phenomenon of powder blocking appears in the process of side powder feeding into the reinforcing phase.

### Comparative Example 5:

The reinforcing phase has a particle size of 30 - 40 µm and a Hall flow velocity of 18 s/50g. The remaining processing parameters are the same as in Example 1.

The particle size of the reinforcing phase is too large, and the problem of falling off of the reinforcing phase occurs during subsequent processing.

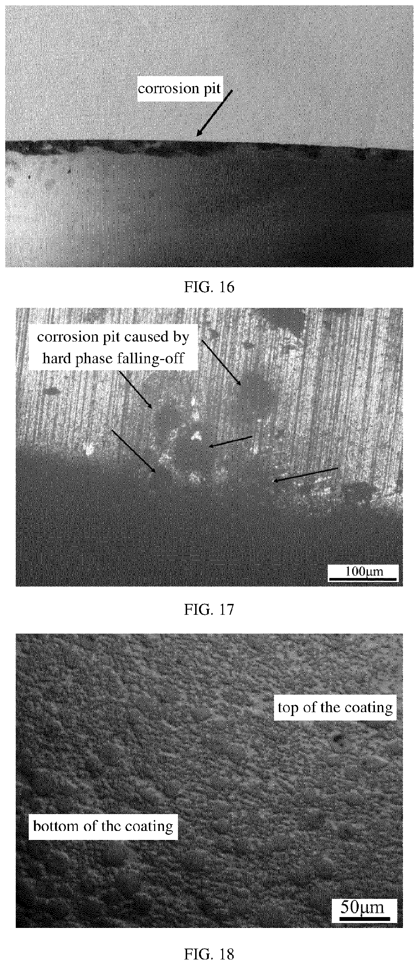

As shown in Figure 15, after the tool is edge-opened, the reinforcing phase particles fall off with a size equivalent to that of the reinforcing phase, so that niobium carbide particles fall off from the coating by a large drag force of friction during polishing. Figure 16 is a corrosion morphology, where more corrosion spots appear after a corrosion test. Figure 17 is a metallograph of corrosion pits observed after the corrosion test. More corrosion pits appear at an edge, and the shape and size of the corrosion pits are equivalent to the diameter of niobium carbide hard particles. The defects are caused by falling off of the niobium carbide hard particles. When the corrosion test is conducted, corrosion spots are firstly generated at the defects, and finally severe corrosion pits are caused.

### Comparative Example 6:

The reinforcing phase is tungsten carbide (with a density of 15.8 g/cm³), and a mass ratio of the bonding phase to the reinforcing phase is 19:1. The reinforcing phase has a particle size of 5 - 20 µm and a Hall flow velocity of 17 s/50g. The bonding phase has a particle size of 53 - 105 µm.

Since the tungsten carbide particles are much denser than the bonding phase, the particles are deposited under the action of gravity at the bottom of the molten pool, resulting in uneven distribution of the reinforcing phase in the coating, i.e. a large content of the reinforcing phase on the lower part of the coating and a small content of the reinforcing phase on the upper part of the coating, as shown in Figure 18. The measured hardness values are low and the wear resistance is low due to a small content of the reinforcing phase on the upper part of the coating.

**Table 1 Test Results of Examples and Comparative Examples**

| Example | Processing condition | | | Average Rockwell hardness number (HRC) | Friction coefficient | Wear (% of tool material) | Salt spray corrosion test for 6 h |
|---|---|---|---|---|---|---|---|
| | Powder blockage | Coating crack | Reinforcing phase peeling -off | | | | |
| Example 1 | No | No | No | 65 | 0.35 | 10% | No transverse or longitudinal cracks, no circular defects greater than 0.4 mm in diameter |
| Example 2 | No | No | No | 67 | 0.3 | 9.3% | No transverse or longitudinal cracks, no circular defects greater than 0.4 mm in diameter |
| Example 3 | No | No | No | 68 | 0.28 | 8.3% | No transverse or longitudinal cracks, no circular defects greater than 0.4 mm in diameter |
| Example 4 | No | No | No | 69 | 0.29 | 8.5% | No transverse or longitudinal cracks, no circular defects greater than 0.4 mm in diameter |
| Example 5 | No | No | No | 68 | 0.28 | 8.7% | No transverse or longitudinal cracks, no circular defects greater than 0.4 mm in diameter |
| Example 6 | No | No | No | 65 | 0.32 | 9.1% | No transverse or longitudinal cracks, no circular defects greater than 0.4 mm in diameter |
| Comparative Example 1 | / | No | No | 52 | 0.45 | 33.3% | No transverse or longitudinal cracks, no circular defects greater than 0.4 mm in diameter |
| Comparative Example 2 | No | No | No | 50 | 0.48 | 43.3% | No transverse or longitudinal cracks, no circular defects greater than 0.4 mm in diameter |
| Comparative Example 3 | No | Fewer | No | 68 | 0.28 | 15% | Severe corrosion at crack edges |
| Comparative Example 4 | Yes | No | No | 48 | 0.8 | 60% | No transverse or longitudinal cracks, no circular defects greater than 0.4 mm in diameter |
| Comparative Example 5 | No | No | Yes | 64 | 0.36 | 16% | No transverse or longitudinal cracks, but severe corrosion occurs where a hard phase falls off |
| Comparative Example 6 | No | No | No | 53 | 0.52 | 38.3% | No transverse or longitudinal cracks, no circular defects greater than 0.4 mm in diameter |

It will be apparent to those skilled in the art that various other changes and modifications can be made in the above-described technical solutions and concepts, and all such changes and modifications are intended to fall within the scope of protection of the appended claims of the present invention.

## Claims

1. A tool coating processing method, **characterized by** comprising:
molten pool forming: converging a bonding phase to a plasma arc heat source by means of a coaxial powder feeding channel, the bonding phase being deposited on a tool base material after melting, so as to form a molten pool; and
reinforcing phase adding: feeding a reinforcing phase by means of a side powder feeding channel into the molten pool after a plasma beam is removed, cladding the bonding phase and the reinforcing phase under the condition of ultrasonic vibration, and forming a coating on the surface of a tool.

2. The tool coating processing method of claim 1, **characterized in that** the bonding phase is a self-fluxing alloy powder, and has a density of 6 - 9 g/cm³ and a powder size of 48 - 250 µm;
preferably, the self-fluxing alloy powder is one or more selected from a group consisting of stainless steel, nickel-based alloy and cobalt-based alloy;
preferably, the stainless steel is one or more selected from a group consisting of 1Cr13, 3Cr13, 304, 316, 420, 440, RWL34, PMC27, 5Cr15MoV, 8Cr13MoV, and 9Cr18MoV;
preferably, the nickel-based alloy is one or more selected from a group consisting of Ni60, Ni60A, Ni60W, Ni55, Ni62, and Deloro60;
preferably, the cobalt-based alloy is one or more selected from a group consisting of Co190, CoCrMo, Co800, Tribaloy 800, and Stellite 20; and
preferably, the self-fluxing alloy powder is one or more selected from a group consisting of 3Cr13, Ni60A, CoCrMo, and 8Cr13MoV.

3. The tool coating processing method of any of the preceding claims, **characterized in that** the reinforcing phase comprises at least one selected from a group consisting of zirconium carbide, niobium carbide, niobium nitride, zirconium nitride, and niobium boride; and the reinforcing phase is spherical particles with a particle size of 5 - 25 µm, a Hall flow velocity of less than 25 s/50g, preferably less than 18 s/50g, and a density of 6.1 - 9.2 g/cm³.

4. The tool coating processing method of any of the preceding claims, **characterized in that** the power of ultrasonic vibration is 50 - 300 W in the reinforcing phase cladding step.

5. The tool coating processing method of any of the preceding claims, **characterized in that** a mass ratio of the bonding phase to the reinforcing phase is 20 : (1 - 50), preferably 12 : (3 - 28), and more preferably 35 : (15 - 35).

6. The tool coating processing method of any of the preceding claims, **characterized in that** an angle between a central axis of the coaxial powder feeding channel and the side powder feeding channel is 15 - 75 degrees.

7. The tool coating processing method of any of the preceding claims, **characterized in that** a distance between a discharge nozzle of the coaxial powder feeding channel and the tool base material is 5 - 15 mm, and a feeding velocity of the bonding phase is 10 - 25 g/min.

8. The tool coating processing method of any of the preceding claims, **characterized in that** a horizontal distance between a discharge nozzle of the side powder feeding channel and the coaxial powder feeding channel is 1 - 5 cm, and a feeding velocity of the reinforcing phase is 5 - 14 g/min.

9. The tool coating processing method of any of the preceding claims, **characterized in that** a plasma beam arc is a combined plasma arc; and
the cladding conditions are: ion gas flow of 0. 6 - 6 L/min, protective gas flow of 5 - 25 L/min, powder feeding gas flow of 0. 6 - 6 L/min, cladding current of 3 - 180 A, base value/striking arc current of 0 - 29 A, pilot arc current of 0 - 20 A, cladding time of 50 - 300 ms, interval time of 50 - 300 ms, protective gas delay of 0 - 5 s, current rise time and fall time of both 0.1 - 0.5 s, protective gas advance of 0 - 3 s, and cladding velocity of 120 - 480 mm/min.

10. The tool coating processing method of any of the preceding claims, **characterized in that** the tool base material is one or more selected from a group consisting of carbon steel and stainless steel; and
preferably, the tool base material is one or more selected from a group consisting of 45# carbon steel, carbon steel Q235, 2Cr13 stainless steel, 3Cr13 stainless steel, 5Cr15 stainless steel, and 304 stainless steel.

11. The tool coating processing method of any of the preceding claims, **characterized by** further comprising annealing, quenching and tempering the tool coating.
